# EUROPEAN PATENT APPLICATION

(11) **EP 4 507 061 A1**
(43) Date of publication of application: **12.02.2025**
(21) Application number: 24184755.7
(22) Date of filing: 26.06.2024
(51) Int. Cl.: H01M 10/0587, H01M 50/103, H01M 50/342, H01M 10/04

(54) **SECONDARY BATTERY**

(30) Priority: 10.08.2023 JP 2023130971
(71) Applicant: Prime Planet Energy & Solutions, Inc., Chuo-ku Tokyo 103-0022 (JP)
(72) Inventor: WAKIMOTO, Ryoichi, Tokyo, 103-0022 (JP); OSHIMA, Kazuki, Tokyo, 103-0022 (JP); IMANISHI, Hiroaki, Tokyo, 103-0022 (JP)
(74) Representative: Kuhnen & Wacker Patent- und Rechtsanwaltsbüro PartG mbB

(57) **Abstract**

A case main body (110) includes a pair of first walls (111) and a pair of second walls (112), the pair of first walls (111) facing each other in a second direction orthogonal to a first direction, the pair of second walls (112) facing each other in a third direction orthogonal to the first direction and the second direction, an area of each of the pair of first walls (111) being larger than an area of each of the pair of second walls (112), one of the pair of second walls (112) is provided with a gas-discharge valve (150) that is fractured when pressure in the case (100) becomes equal to or more than a predetermined value, and the other of the pair of second walls (112) is provided with a joining portion (115) extending in the first direction.

## Description

### CROSS REFERENCE TO RELATED APPLICATIONS

This nonprovisional application is based on Japanese Patent Application No. 2023-130971 filed on August 10, 2023 with the Japan Patent Office, the entire contents of which are hereby incorporated by reference.

### BACKGROUND OF THE INVENTION

### Field of the Invention

The present technology relates to a secondary battery.

### Description of the Background Art

Japanese Patent Laying-Open No. 2001-143664 discloses that a safety valve is formed by forming a thin portion in any of side surfaces of a prismatic case other than a terminal surface and a bottom surface.

### SUMMARY OF THE INVENTION

In response to an increase in capacity of a battery, a secondary battery has become large in size. From the viewpoint of reliability in such a secondary battery having a large size, there is room for further improvement in the battery described in Japanese Patent Laying-Open No. 2001-143664. An object of the present technology is to provide a secondary battery having high capacity and high reliability.

The present technology provides the following secondary battery.
[1] A secondary battery comprising: an electrode assembly including a first electrode and a second electrode having a polarity different from a polarity of the first electrode; and a case that accommodates the electrode assembly, wherein the case includes a case main body provided with a first opening and a second opening, the first opening being located at an end portion of the case main body on a first side in a first direction, the second opening being located at an end portion of the case main body on a second side opposite to the first side in the first direction, a first sealing plate that seals the first opening, and a second sealing plate that seals the second opening, the case main body includes a pair of first walls and a pair of second walls, the pair of first walls facing each other in a second direction orthogonal to the first direction, the pair of second walls facing each other in a third direction orthogonal to the first direction and the second direction, an area of each of the pair of first walls being larger than an area of each of the pair of second walls, one of the pair of second walls is provided with a gas-discharge valve that is fractured when pressure in the case becomes equal to or more than a predetermined value, and the other of the pair of second walls is provided with a joining portion extending in the first direction.
[2] The secondary battery according to [1], wherein the gas-discharge valve is provided with a thin portion or groove portion formed in the one of the pair of second walls.
[3] The secondary battery according to [1] or [2], wherein the electrode assembly includes a main body portion, a first electrode tab electrically connected to the first electrode and located on the first side with respect to the main body portion, and a second electrode tab electrically connected to the second electrode and located on the second side with respect to the main body portion, the first electrode tab is electrically connected to a first electrode terminal provided on the first sealing plate, and the second electrode tab is electrically connected to a second electrode terminal provided on the second sealing plate.
[4] The secondary battery according to [1] or [2], wherein the electrode assembly includes a main body portion, a first electrode tab electrically connected to the first electrode and located on the first side with respect to the main body portion, and a second electrode tab electrically connected to the second electrode and located on the second side with respect to the main body portion, at least a portion of the gas-discharge valve is disposed in a first end portion region close to the first opening with respect to the main body portion of the electrode assembly in the first direction, and at least a portion of the gas-discharge valve is disposed in a second end portion region close to the second opening with respect to the main body portion of the electrode assembly in the first direction.
[5] The secondary battery according to any one of [1] to [4], wherein the electrode assembly includes a first electrode assembly and a second electrode assembly, and each of the first electrode assembly and the second electrode assembly is a wound type electrode assembly, the first electrode assembly and the second electrode assembly are disposed adjacent to each other, the first electrode assembly includes a first curved surface facing the one of the pair of second walls, and the first curved surface has a first apex closest to the one of the pair of second walls, the second electrode assembly includes a second curved surface facing the one of the pair of second walls, and the second curved surface has a second apex closest to the one of the pair of second walls, and at least a portion of the gas-discharge valve is disposed in a region located between the first apex and the second apex in the second direction.
[6] The secondary battery according to any one of [1] to [5], further comprising an insulating sheet covering at least a portion of an outer periphery of the electrode assembly, wherein the insulating sheet includes a first end side and a second end side each extending in the first direction, each of the first end side and the second end side is disposed at a position facing the one of the pair of second walls, and a region in which two portions of the insulating sheet overlap with each other is provided between the first end side and the second end side.
[7] The secondary battery according to any one of [1] to [6], wherein the gas-discharge valve is disposed at each of a plurality of regions separated from each other in the one of the pair of second walls.
[8] The secondary battery according to any one of [1] to [7], wherein a thin region of the case main body having a relatively small thickness is formed in the one of the pair of second walls, and the gas-discharge valve is disposed inside the thin region.
[9] The secondary battery according to any one of [1] to [8], wherein the joining portion is disposed at a position deviated from a center of the other of the pair of second walls to any of end portion sides of the other of the pair of second walls in the second direction.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view showing a configuration of a secondary battery according to one embodiment of the present technology.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a diagram showing a state in which the secondary battery shown in Fig. 1 is viewed in a direction of arrow V.
Fig. 6 is a front cross sectional view of the secondary battery shown in Fig. 1.
Fig. 7 is a front view showing a negative electrode raw plate before a negative electrode plate is formed.
Fig. 8 is a cross sectional view of the negative electrode raw plate shown in Fig. 7 along VIII-VIII.
Fig. 9 is a front view showing the negative electrode plate formed from the negative electrode raw plate.
Fig. 10 is a front view showing a positive electrode raw plate before a positive electrode plate is formed.
Fig. 11 is a cross sectional view of the positive electrode raw plate shown in Fig. 10 along XI-XI.
Fig. 12 is a front view showing the positive electrode plate formed from the positive electrode raw plate.
Fig. 13 is a diagram showing an electrode assembly and a current collector each removed from the secondary battery.
Fig. 14 is a front view of a connection structure between a negative electrode tab group and a negative electrode current collector.
Fig. 15 is a cross sectional view of the connection structure between the negative electrode tab group and the negative electrode current collector.
Fig. 16 is a diagram showing a step of inserting the electrode assembly into a case main body.
Fig. 17 is a diagram showing a step of disposing a spacer between a sealing plate and the electrode assembly.
Fig. 18 is a diagram showing a plate-shaped member constituting the case main body.
Fig. 19 is a diagram showing a state in which the plate-shaped member shown in Fig. 18 is folded.
Fig. 20 is a diagram showing exemplary arrangements of the electrode assembly and an insulating sheet inside the case main body.
Fig. 21 is a developed view of the insulating sheet.
Fig. 22 is a front view showing the electrode assembly and the insulating sheet.
Fig. 23 is a diagram showing a modification of arrangements of the electrode assembly and the insulating sheet inside the case main body.
Fig. 24 is a diagram showing upper portions of a plurality of wound type electrode assemblies.
Fig. 25 is a first diagram showing an arrangement of a gas-discharge valve.
Fig. 26 is a second diagram showing an arrangement of the gas-discharge valve.
Fig. 27 is a third diagram showing an arrangement of the gas-discharge valve.
Fig. 28 is a fourth diagram showing an arrangement of the gas-discharge valve.
Fig. 29 is a fifth diagram showing an arrangement of the gas-discharge valve.
Fig. 30 is a sixth diagram showing an arrangement of the gas-discharge valve.
Fig. 31 is a seventh diagram showing an arrangement of the gas-discharge valve.
Fig. 32 is an eighth diagram showing an arrangement of the gas-discharge valve.
Fig. 33 is a ninth diagram showing an arrangement of the gas-discharge valve.
Fig. 34 is a cross sectional view along XXXIV-XXXIV in Fig. 33.
Fig. 35 is an enlarged cross sectional view showing an exemplary groove portion constituting the gas-discharge valve.
Fig. 36 is a diagram for illustrating the arrangement of the gas-discharge valve in a first direction.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "secondary battery" is not limited to a lithium ion battery, and may include other secondary batteries such as a nickel-metal hydride battery, a sodium ion battery, and a solid electrolyte secondary battery. In the present specification, the term "electrode" may collectively represents a positive electrode and a negative electrode.

It should be noted that in the figures, it is defined that: an X direction serving as a first direction represents a direction along a winding axis of an electrode assembly included in the secondary battery; a Y direction serving as a second direction represents a short-side direction of the electrode assembly when viewed in the first direction, the second direction being orthogonal to the first direction; and a Z direction serving as a third direction represents a long-side direction of the electrode assembly when viewed in the first direction, the third direction being orthogonal to the first direction. In order to facilitate understanding of the invention, the size of each component in the figures may be illustrated to be changed from its actual size.

In the specification of the present application, the first direction (X direction) may be referred to as a "width direction" of the secondary battery or the case main body, the second direction (Y direction) may be referred to as a "thickness direction" of the secondary battery or the case main body, and the third direction (Z direction) may be referred to as a "height direction" of the secondary battery or the case main body.

### (Overall Configuration of Battery)

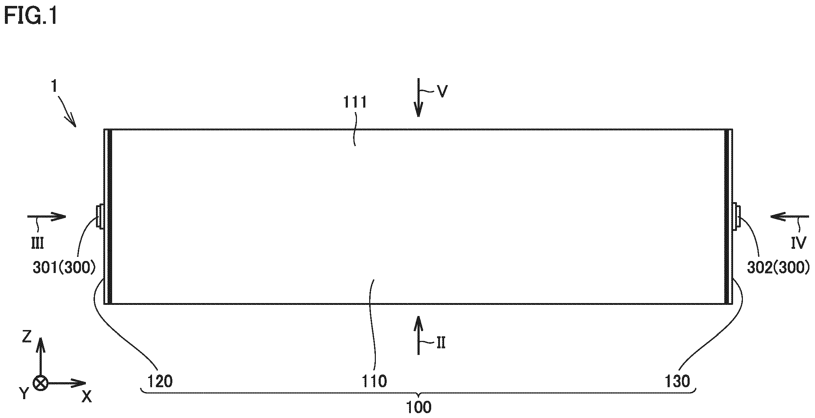

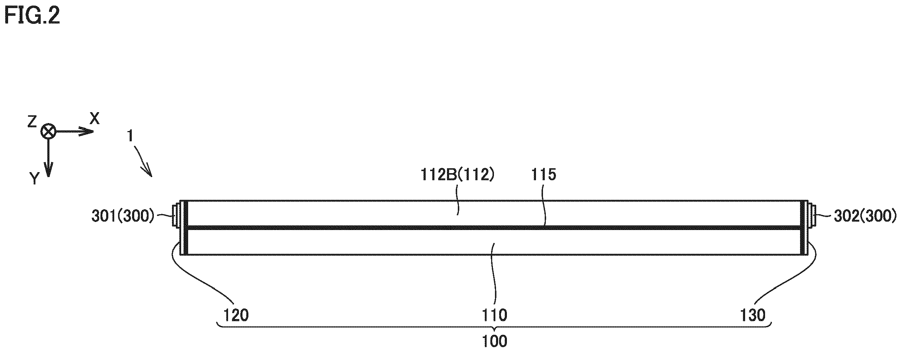

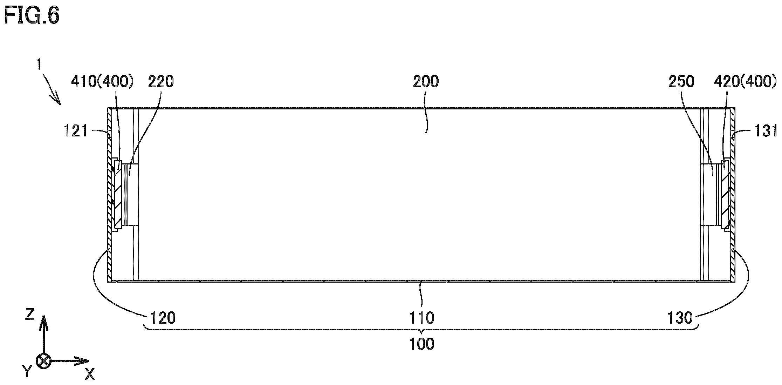

Fig. 1 is a front view of a secondary battery 1 according to the present embodiment. Figs. 2 to 5 are diagrams showing states of secondary battery 1 shown in Fig. 1 when viewed in directions of arrows II, III, IV, and V respectively. Fig. 6 is a front cross sectional view of secondary battery 1 shown in Fig. 1.

Secondary battery 1 can be mounted on a battery electric vehicle (BEV), a plug-in hybrid electric vehicle (PHEV), a hybrid electric vehicle (HEV), or the like. It should be noted that the purpose of use of secondary battery 1 is not limited to the use on a vehicle.

As shown in Figs. 1 to 6, secondary battery 1 includes a case 100, an electrode assembly 200, electrode terminals 300, and current collectors 400. Case 100 includes a case main body 110, a first sealing plate 120, and a second sealing plate 130.

When forming a battery assembly including secondary battery 1, a plurality of secondary batteries 1 are stacked in the thickness direction of each of the plurality of secondary batteries 1. Secondary batteries 1 stacked may be restrained in the stacking direction (Y direction) by a restraint member to form a battery module, or the battery assembly may be directly supported by a side surface of a case of a battery pack without using the restraint member.

Case main body 110 is constituted of a member having a tubular shape, preferably, a prismatic tubular shape. Thus, secondary battery 1 having a prismatic shape is obtained. Case main body 110 is composed of a metal. Specifically, case main body 110 is composed of aluminum, an aluminum alloy, iron, an iron alloy, or the like.

As shown in Figs. 1 and 2, first sealing plate 120 and second sealing plate 130 are provided at respective end portions of the case main body. Case main body 110 can be formed to have a prismatic tubular shape in, for example, the following manner: end sides of a plate-shaped member having been bent are brought into abutment with each other (joining portion 115 illustrated in Fig. 2) and are joined together (for example, laser welding). Each of the corners of the "prismatic tubular shape" may have a shape with a curvature. Joining portion 115 in the present embodiment extends on an outer peripheral surface portion of case main body 110 in the first direction (X direction).

In the present embodiment, case main body 110 is formed to be longer in the width direction (X direction) of secondary battery 1 than in each of the thickness direction (Y direction) and the height direction (Z direction) of secondary battery 1. The size (width) of case main body 110 in the X direction is preferably about 30 cm or more. In this way, secondary battery 1 can be formed to have a relatively large size (high capacity). The size (height) of case main body 110 in the Z direction is preferably about 20 cm or less, more preferably about 15 cm or less, and further preferably about 10 cm or less. Thus, (low-height) secondary battery 1 having a relatively low height can be formed, thus resulting in improved ease of mounting on a vehicle, for example.

Case main body 110 includes a pair of first side surface portions 111 (first walls) and a pair of second side surface portions 112 (second walls). The pair of first side surface portions 111 constitute parts of the side surfaces of case 100. The pair of second side surface portions 112 constitute an upper surface portion 112A and a bottom surface portion 112B of case 100. The pair of first side surface portions 111 and the pair of second side surface portions 112 are provided to intersect each other. The pair of first side surface portions 111 and the pair of second side surface portions 112 are connected at their respective end portions. Each of the pair of first side surface portions 111 has an area larger than that of each of the pair of second side surface portions 112.

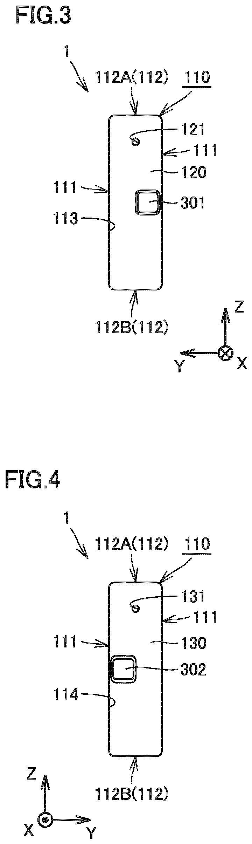

As shown in Fig. 3, a first opening 113 is provided at an end portion of case main body 110 on a first side in the first direction (X direction). First opening 113 is sealed by first sealing plate 120. Each of first opening 113 and first sealing plate 120 has a substantially rectangular shape in which the Y direction corresponds to its short-side direction and the Z direction corresponds to its long-side direction.

First sealing plate 120 is provided with a negative electrode terminal 301 (first electrode terminal) and an injection hole 121. The positions of negative electrode terminal 301 and injection hole 121 can be appropriately changed. First sealing plate 120 can be joined to case main body 110 by laser welding, for example,

As shown in Fig. 4, a second opening 114 is provided at an end portion of case main body 110 on a second side opposite to the first side in the first direction (X direction). Second opening 114 is sealed by second sealing plate 130. Each of second opening 114 and second sealing plate 130 has a substantially rectangular shape in which the Y direction corresponds to its short-side direction and the Z direction corresponds to its long-side direction.

Second sealing plate 130 is provided with a positive electrode terminal 302 (second electrode terminal) and an injection hole 131. The positions of positive electrode terminal 302 and injection hole 131 can be appropriately changed. Second sealing plate 130 can be joined to case main body 110 by laser welding, for example.

Each of first sealing plate 120 and second sealing plate 130 is composed of a metal. Specifically, each of first sealing plate 120 and second sealing plate 130 is composed of aluminum, an aluminum alloy, iron, an iron alloy, or the like.

In one example, the thickness of each of first sealing plate 120 and second sealing plate 130 is thicker than the thickness (plate thickness) of case main body 110.

Negative electrode terminal 301 is electrically connected to a negative electrode of electrode assembly 200. Negative electrode terminal 301 is attached to first sealing plate 120, i.e., case 100.

Positive electrode terminal 302 is electrically connected to a positive electrode of electrode assembly 200. Positive electrode terminal 302 is attached to second sealing plate 130, i.e., case 100.

Negative electrode terminal 301 is composed of a conductive material (more specifically, a metal), and can be composed of copper, a copper alloy, or the like, for example. A portion or layer composed of aluminum or an aluminum alloy may be provided at a portion of an outer surface of negative electrode terminal 301.

Positive electrode terminal 302 is composed of a conductive material (more specifically, a metal), and can be composed of aluminum, an aluminum alloy, or the like, for example.

Each of injection holes 121, 131 is sealed with a sealing member (not shown). As the sealing member, for example, a blind rivet or another metal member can be used.

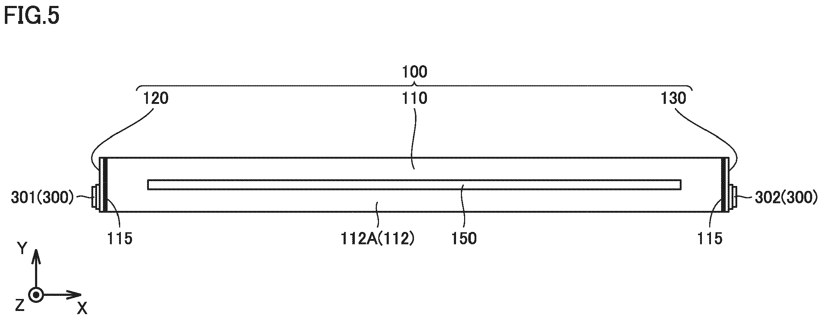

As shown in Fig. 5, a gas-discharge valve 150 is provided in upper surface portion 112A of case 100. Gas-discharge valve 150 is formed to extend in the X direction. Gas-discharge valve 150 is a thin portion formed in upper surface portion 112A of case 100. Gas-discharge valve 150 is fractured to discharge a gas in case 100 to outside when pressure in case 100 becomes equal to or more than a predetermined value.

Electrode assembly 200 is an electrode assembly having a flat shape and having a below-described positive electrode plate and a below-described negative electrode plate. Specifically, electrode assembly 200 is a wound type electrode assembly in which a strip-shaped positive electrode plate and a strip-shaped negative electrode plate are both wound with a strip-shaped separator (not shown) being interposed therebetween. It should be noted that in the present specification, the "electrode assembly" is not limited to the wound type electrode assembly, and may be a stacked type electrode assembly in which a plurality of positive electrode plates and a plurality of negative electrode plates are alternately stacked. The strip-shaped separator can be constituted of, for example, a microporous membrane composed of polyolefin. The electrode assembly may include a plurality of positive electrode plates and a plurality of negative electrode plates, respective positive electrode tabs provided in the positive electrode plates may be stacked to form a positive electrode tab group, and respective negative electrode tabs provided in the negative electrode plates may be stacked to form a negative electrode tab group.

As shown in Fig. 6, case 100 accommodates electrode assembly 200. Electrode assembly 200 is accommodated in case 100 such that the winding axis thereof is parallel to the X direction.

Specifically, one or a plurality of the wound type electrode assemblies and an electrolyte solution (electrolyte) (not shown) are accommodated inside a below-described insulating sheet 700 disposed in case 100. As the electrolyte solution (non-aqueous electrolyte solution), it is possible to use, for example, a solution obtained by dissolving LiPF₆ at a concentration of 1.2 mol/L in a non-aqueous solvent obtained by mixing ethylene carbonate (EC), ethyl methyl carbonate (EMC), and diethyl carbonate (DEC) at a volume ratio (25°C) of 30:30:40. It should be noted that instead of the electrolyte solution, a solid electrolyte may be used.

Electrode assembly 200 includes: a main body portion (portion in which a positive electrode plate and a negative electrode plate are stacked with a separator being interposed therebetween); a negative electrode tab group 220 (first electrode tab group); and a positive electrode tab group 250 (second electrode tab group). The main body portion of electrode assembly 200 corresponds to a rectangular portion other than negative electrode tab group 220 and positive electrode tab group 250.

The main body portion is constituted of a below-described negative electrode plate 210 and a below-described positive electrode plate 240. Negative electrode tab group 220 is located at an end portion of electrode assembly 200 on the first side with respect to the main body portion in the first direction (X direction). The first side in the present embodiment is the first sealing plate 120 side. Positive electrode tab group 250 is located at an end portion of electrode assembly 200 on the second side with respect to the main body portion in the first direction (X direction). The second side in the present embodiment is the second sealing plate 130 side.

Each of negative electrode tab group 220 and positive electrode tab group 250 is formed to protrude from a central portion of electrode assembly 200 toward first sealing plate 120 or second sealing plate 130.

Current collectors 400 include a negative electrode current collector 410 (first current collector) and a positive electrode current collector 420 (second current collector). Each of negative electrode current collector 410 and positive electrode current collector 420 is constituted of a plate-shaped member. Electrode assembly 200 is electrically connected to negative electrode terminal 301 and positive electrode terminal 302 through current collectors 400.

Negative electrode current collector 410 is disposed on first sealing plate 120 with an insulating member composed of a resin being interposed therebetween. Negative electrode current collector 410 is electrically connected to negative electrode tab group 220 and negative electrode terminal 301. Negative electrode current collector 410 is composed of a conductive material (more specifically, a metal), and can be composed of copper, a copper alloy, or the like, for example.

Positive electrode current collector 420 is disposed on second sealing plate 130 with an insulating member composed of a resin being interposed therebetween. Positive electrode current collector 420 is electrically connected to positive electrode tab group 250 and positive electrode terminal 302. Positive electrode current collector 420 is composed of a conductive material (more specifically, a metal), and can be composed of aluminum, an aluminum alloy, or the like, for example. It should be noted that positive electrode tab group 250 may be electrically connected to second sealing plate 130 directly or via positive electrode current collector 420. In this case, second sealing plate 130 may serve as positive electrode terminal 302.

### (Configuration of Electrode Assembly 200)

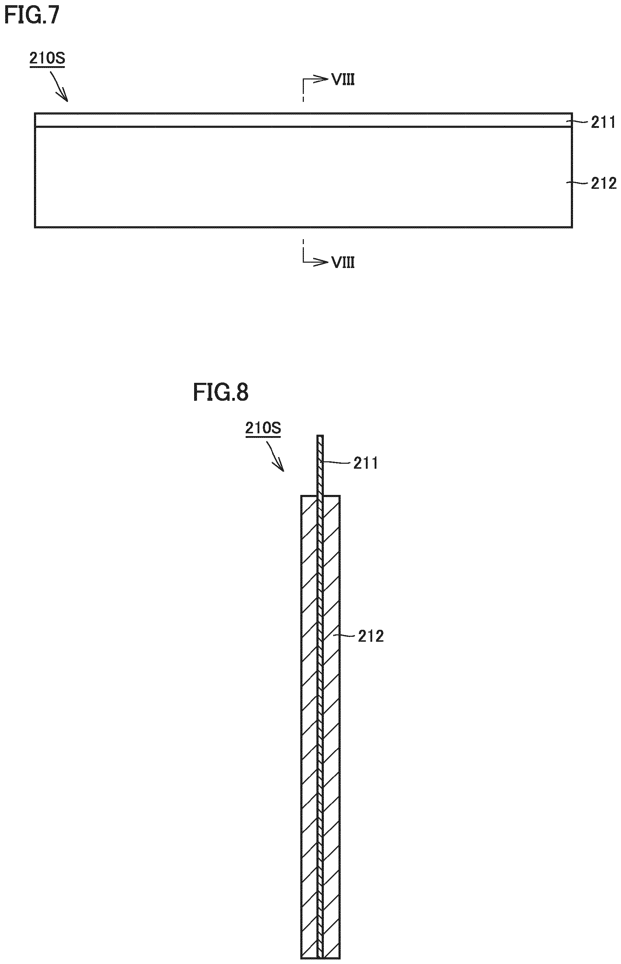

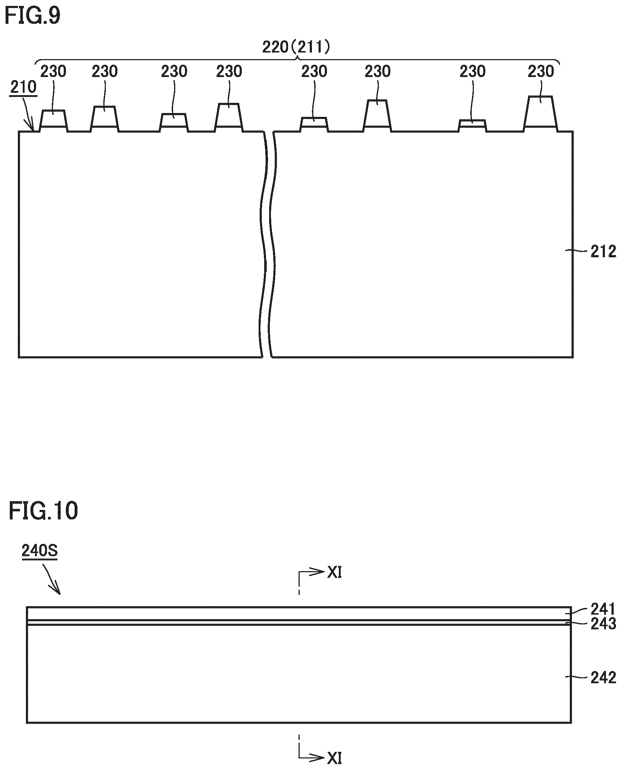

Fig. 7 is a front view showing a negative electrode raw plate 210S before negative electrode plate 210 (first electrode) is formed, Fig. 8 is a cross sectional view of negative electrode raw plate 210S shown in Fig. 7 along VIII-VIII, and Fig. 9 is a front view showing negative electrode plate 210 formed from negative electrode raw plate 210S.

Negative electrode plate 210 is manufactured by processing negative electrode raw plate 210S. As shown in Figs. 7 and 8, negative electrode raw plate 210S includes a negative electrode core body 211 and a negative electrode active material layer 212. Negative electrode core body 211 is a copper foil or a copper alloy foil.

Negative electrode active material layer 212 is formed on negative electrode core body 211 except for each of end portions of both surfaces of negative electrode core body 211 on one side. Negative electrode active material layer 212 is formed by applying a negative electrode active material layer slurry using a die coater.

The negative electrode active material layer slurry is produced by kneading graphite serving as a negative electrode active material, styrene-butadiene rubber (SBR) and carboxymethyl cellulose (CMC) each serving as a binder, and water serving as a dispersion medium such that the mass ratio of the graphite, the SBR, and the CMC is about 98:1:1.

Negative electrode core body 211 having the negative electrode active material layer slurry applied thereon is dried to remove the water included in the negative electrode active material layer slurry, thereby forming negative electrode active material layer 212. Further, by compressing negative electrode active material layer 212, negative electrode raw plate 210S including negative electrode core body 211 and negative electrode active material layer 212 is formed. Negative electrode raw plate 210S is cut into a predetermined shape, thereby forming negative electrode plate 210. Negative electrode raw plate 210S can be cut by laser processing with application of an energy ray, die processing, cutter processing, or the like.

As shown in Fig. 9, a plurality of negative electrode tabs 230 each constituted of negative electrode core body 211 are provided at one end portion, in the width direction, of negative electrode plate 210 formed from negative electrode raw plate 210S. When negative electrode plate 210 is wound, the plurality of negative electrode tabs 230 are stacked to form negative electrode tab group 220. Thus, negative electrode tab group 220 is connected to negative electrode plate 210 (first electrode). The position of each of the plurality of negative electrode tabs 230 and the length thereof in the protruding direction are appropriately adjusted in consideration of the state in which negative electrode tab group 220 is connected to negative electrode current collector 410. It should be noted that the shape of negative electrode tab 230 is not limited to the one illustrated in Fig. 9.

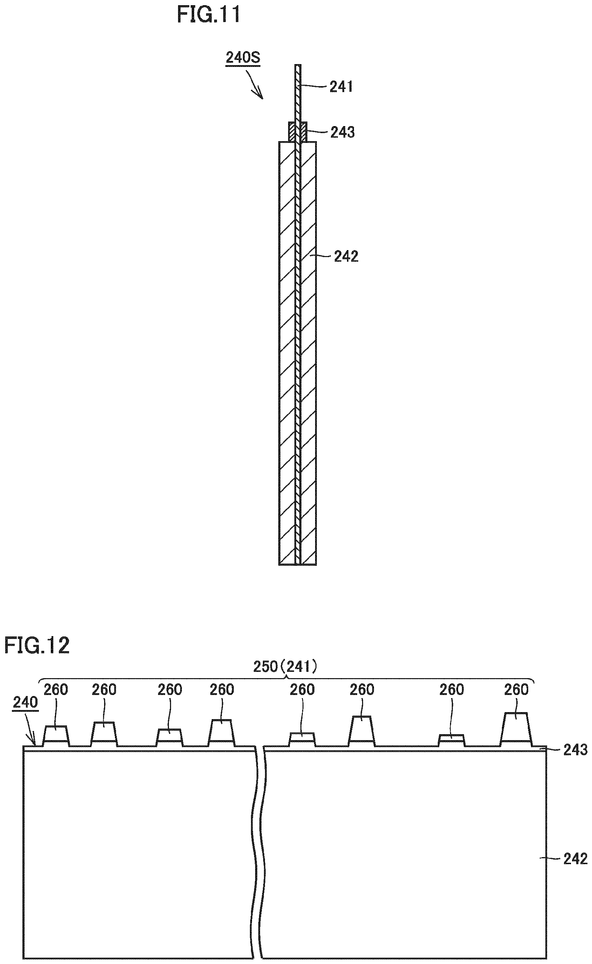

Fig. 10 is a front view showing a positive electrode raw plate 240S before positive electrode plate 240 (second electrode) is formed, Fig. 11 is a cross sectional view of positive electrode raw plate 240S shown in Fig. 10 along XI-XI, and Fig. 12 is a front view showing positive electrode plate 240 formed from positive electrode raw plate 240S.

Positive electrode plate 240 serving as the second electrode has a polarity different from a polarity of negative electrode plate 210 serving as the first electrode. Positive electrode plate 240 is manufactured by processing positive electrode raw plate 240S. As shown in Figs. 10 and 11, positive electrode raw plate 240S includes a positive electrode core body 241, a positive electrode active material layer 242, and a positive electrode protective layer 243. Positive electrode core body 241 is an aluminum foil or an aluminum alloy foil.

Positive electrode active material layer 242 is formed on positive electrode core body 241 except for each of end portions of both surfaces of positive electrode core body 241 on one side. Positive electrode active material layer 242 is formed on positive electrode core body 241 by applying a positive electrode active material layer slurry using a die coater.

The positive electrode active material layer slurry is produced by kneading a lithium-nickel-cobalt-manganese composite oxide serving as a positive electrode active material, polyvinylidene difluoride (PVdF) serving as a binder, a carbon material serving as a conductive material, and N-methyl-2-pyrrolidone (NMP) serving as a dispersion medium such that the mass ratio of the lithium-nickel-cobalt-manganese composite oxide, the PVdF, and the carbon material is about 97.5: 1: 1.5.

Positive electrode protective layer 243 is formed in contact with positive electrode core body 241 at an end portion of positive electrode active material layer 242 on the one side in the width direction. Positive electrode protective layer 243 is formed on positive electrode core body 241 by applying a positive electrode protective layer slurry using a die coater. Positive electrode protective layer 243 has an electrical resistance larger than that of positive electrode active material layer 242.

The positive electrode protective layer slurry is produced by kneading alumina powder, a carbon material serving as a conductive material, PVdF serving as a binder, and NMP serving as a dispersion medium such that the mass ratio of the alumina powder, the carbon material, and the PVdF is about 83:3:14.

Positive electrode core body 241 having the positive electrode active material layer slurry and the positive electrode protective layer slurry applied thereon is dried to remove the NMP included in the positive electrode active material layer slurry and the positive electrode protective layer slurry, thereby forming positive electrode active material layer 242 and positive electrode protective layer 243. Further, by compressing positive electrode active material layer 242, positive electrode raw plate 240S including positive electrode core body 241, positive electrode active material layer 242, and positive electrode protective layer 243 is formed. Positive electrode raw plate 240S is cut into a predetermined shape, thereby forming positive electrode plate 240. Positive electrode raw plate 240S can be cut by laser processing with application of an energy ray, die processing, cutter processing, or the like.

As shown in Fig. 12, a plurality of positive electrode tabs 260 each constituted of positive electrode core body 241 are provided at one end portion, in the width direction, of positive electrode plate 240 formed from positive electrode raw plate 240S. When positive electrode plate 240 is wound, the plurality of positive electrode tabs 260 are stacked to form positive electrode tab group 250. Thus, positive electrode tab group 250 is connected to positive electrode plate 240 (second electrode). The position of each of the plurality of positive electrode tabs 260 and the length thereof in the protruding direction are appropriately adjusted in consideration of the state in which positive electrode tab group 250 is connected to positive electrode current collector 420. It should be noted that the shape of positive electrode tab 260 is not limited to the one illustrated in Fig. 12.

Positive electrode protective layer 243 is provided at the root of each of the plurality of positive electrode tabs 260. Positive electrode protective layer 243 may not necessarily be provided at the root of positive electrode tab 260.

In a typical example, the thickness of (one) negative electrode tab 230 is smaller than the thickness of (one) positive electrode tab 260. In this case, the thickness of negative electrode tab group 220 is smaller than the thickness of positive electrode tab group 250.

### (Connection Structure between Electrode Assembly 200 and Current Collector 400)

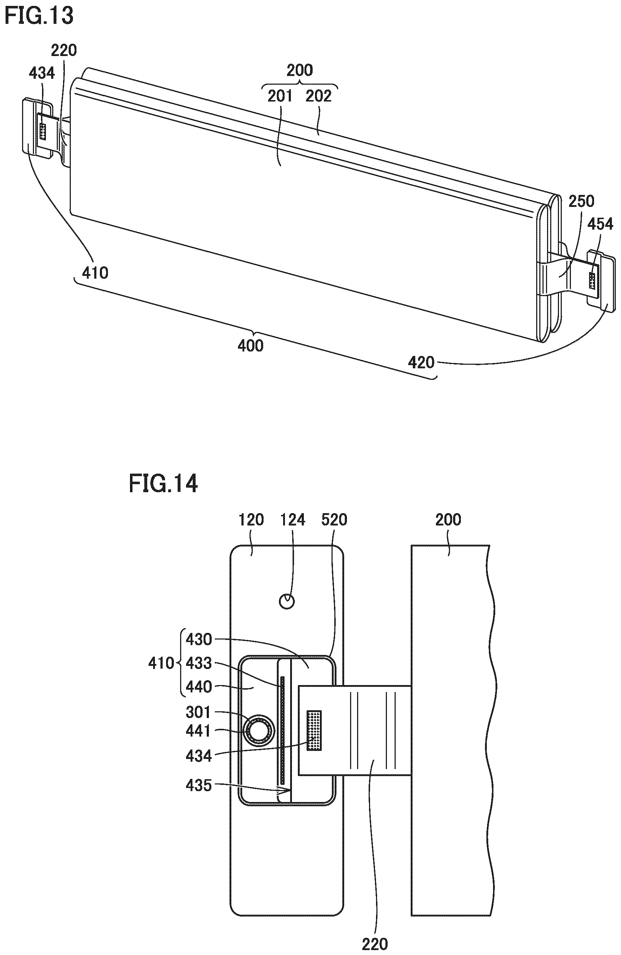

Fig. 13 is a diagram showing electrode assembly 200 and current collector 400 each removed from secondary battery 1. As shown in Fig. 13, electrode assembly 200 is formed by stacking two electrode assemblies 201, 202, each of which is a wound type electrode assembly. Although Fig. 13 illustratively shows the structure in which two wound type electrode assemblies are stacked, electrode assembly 200 may be constituted of one wound type electrode assembly, may be constituted of three or more wound type electrode assemblies, or may be constituted of a stacked type electrode assembly.

Negative electrode tab group 220 is joined to negative electrode current collector 410 at a joining location 434 and positive electrode tab group 250 is joined to positive electrode current collector 420 at a joining location 454.

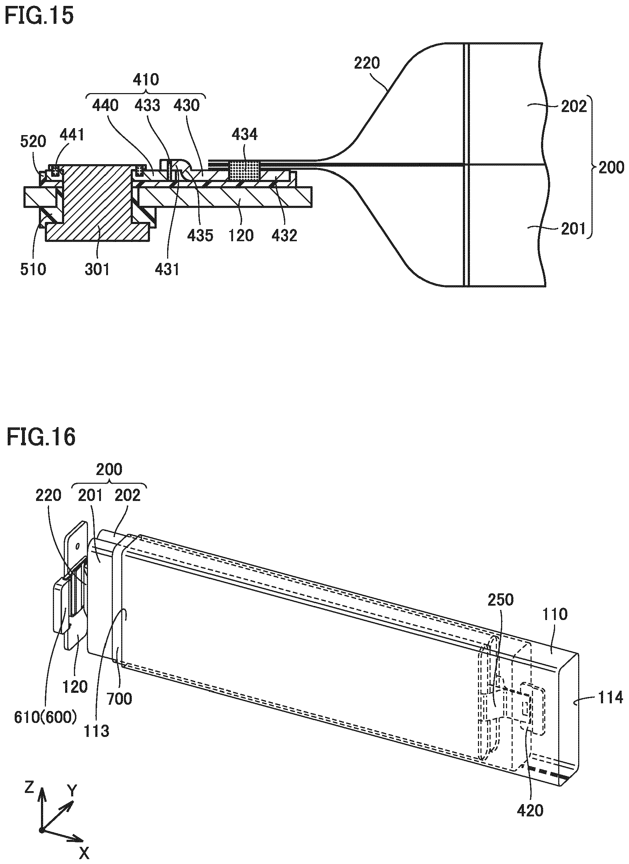

Fig. 14 is a front view of a connection structure between the negative electrode tab group and the negative electrode current collector. Fig. 15 is a cross sectional view of the connection structure between the negative electrode tab group and the negative electrode current collector.

As shown in Figs. 14 and 15, negative electrode current collector 410 electrically connects negative electrode terminal 301 and negative electrode tab group 220. Negative electrode current collector 410 in the present embodiment is connected to negative electrode terminal 301 between electrode assembly 200 and first sealing plate 120.

Negative electrode current collector 410 includes a first conductive member 430 and a second conductive member 440. First conductive member 430 and second conductive member 440 are joined to each other at a joining location 433. First conductive member 430 and second conductive member 440 are joined by, for example, laser welding.

First conductive member 430 is joined to negative electrode tab group 220 at a joining location 434. Joining location 434 can be formed by, for example, ultrasonic welding, resistance welding, laser welding, swaging, or the like. In the present embodiment, first conductive member 430 and negative electrode tab group 220 are joined by, for example, ultrasonic bonding.

Second conductive member 440 is connected to negative electrode terminal 301 at a joining location 441. Joining location 441 can be formed by, for example, ultrasonic welding, resistance welding, laser welding, swaging, or the like. In the present embodiment, negative electrode terminal 301 and second conductive member 440 are joined by, for example, providing a through hole in second conductive member 440, inserting negative electrode terminal 301 into the through hole, swaging negative electrode terminal 301 on second conductive member 440, and then welding the swaged portion and second conductive member 440.

First conductive member 430 has a first flat surface portion 431 and a second flat surface portion 432. First flat surface portion 431 is connected to second conductive member 440. Second flat surface portion 432 is connected to negative electrode tab group 220. Second flat surface portion 432 is disposed along first sealing plate 120.

A stepped portion 435 is provided between first flat surface portion 431 and second flat surface portion 432. In a state after secondary battery 1 is assembled, the positions of first flat surface portion 431 and second flat surface portion 432 in the first direction (X direction) are made different by stepped portion 435. Thus, first flat surface portion 431 and second flat surface portion 432 can be arranged side by side in one direction. Stepped portion 435 extends along the third direction (Z direction).

A first insulating member 510 (resin member) is disposed between negative electrode terminal 301 and first sealing plate 120. A second insulating member 520 (resin member) is disposed between first sealing plate 120 and each of first conductive member 430 and second conductive member 440. It should be noted that first insulating member 510 and second insulating member 520 may be an integrated component.

Negative electrode terminal 301 is attached to first sealing plate 120 with first insulating member 510 being interposed therebetween. Negative electrode terminal 301 is provided to be exposed to the outside of first sealing plate 120 and reach second conductive member 440 of negative electrode current collector 410 provided on the inner surface side of first sealing plate 120.

As a procedure for assembling each component, first, negative electrode terminal 301 and second conductive member 440 as well as first insulating member 510 and second insulating member 520 are attached to first sealing plate 120. Next, first conductive member 430 electrically connected to electrode assembly 200 is attached to second conductive member 440. On this occasion, first conductive member 430 is disposed on first insulating member 510 such that a portion of first conductive member 430 overlaps with second conductive member 440. Next, first conductive member 430 and second conductive member 440 are welded and connected to each other at joining location 434.

It should be noted that negative electrode terminal 301 may be electrically connected to first sealing plate 120. Further, first sealing plate 120 may serve as negative electrode terminal 301.

It should be noted that each of Figs. 14 and 15 illustrates negative electrode current collector 410 constituted of two components (first conductive member 430 and second conductive member 440); however, negative electrode current collector 410 may be constituted of one component.

Each of Figs. 14 and 15 shows the connection structure on the negative electrode side; however, the basic connection structure on the positive electrode side is the same as that on the negative electrode side.

### (Step of Inserting Electrode Assembly 200)

Fig. 16 is a diagram showing a step of inserting electrode assembly 200 into case main body 110. As shown in Fig. 16, insulating sheet 700 (electrode assembly holder) composed of a resin is disposed between electrode assembly 200 and case main body 110.

Insulating sheet 700 may be composed of, for example, a resin. More specifically, the material of insulating sheet 700 is, for example, polypropylene (PP), polyethylene terephthalate (PET), polyphenylene sulfide (PPS), polyimide (PI), or polyolefin (PO).

Insulating sheet 700 does not necessarily need to cover a whole of the surfaces of electrode assembly 200. Insulating sheet 700 preferably covers an area of about 50% or more, more preferably about 70% or more, of the outer surfaces of the electrode assembly. Insulating sheet 700 preferably covers a whole of at least four surfaces of the six surfaces of electrode assembly 200 having a substantially rectangular parallelepiped shape (flat shape) other than the two surfaces thereof on which negative electrode tab group 220 and positive electrode tab group 250 are formed respectively.

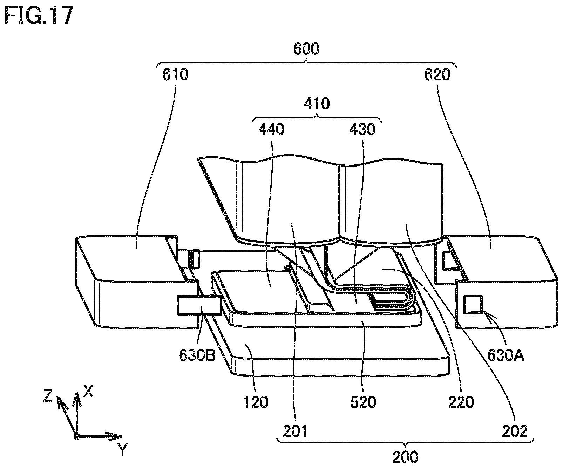

Fig. 17 is a diagram showing a step of disposing a first spacer 600 between first sealing plate 120 and electrode assembly 200.

As shown in Fig. 17, negative electrode tab group 220 extends from electrode assembly 200 toward first sealing plate 120 in the following manner: negative electrode tab group 220 extends from the central portion of first sealing plate 120 to an end portion of first sealing plate 120 in the Y direction and is then curved to be folded back toward the central portion in an opposite direction. First spacer 600 is provided to store the curved part of negative electrode tab group 220. First spacer 600 is disposed between electrode assembly 200 and first sealing plate 120.

First spacer 600 includes a first component 610 and a second component 620. First component 610 and second component 620 are slid along the Y direction from the respective end portion sides to the center side of first sealing plate 120, and are accordingly engaged with each other by engagement portions 630A, 630B. Thus, first spacer 600 is fixed to first sealing plate 120 with second insulating member 520 being interposed therebetween, thereby increasing stability of the position of first spacer 600.

Secondary battery 1 according to the present embodiment includes a second spacer (not shown). The second spacer is disposed between the electrode assembly and the second sealing plate. The second spacer may have the same structure as that of first spacer 600. First spacer 600 and the second spacer may have shapes different from each other.

### (Production of Case Main Body 110)

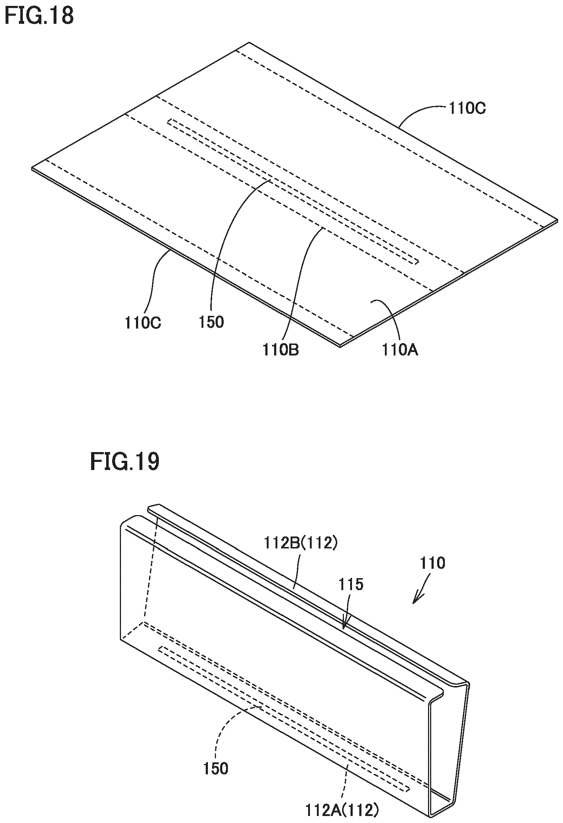

Fig. 18 is a diagram showing a plate-shaped member 110A constituting case main body 110. Fig. 19 is a diagram showing a state in which plate-shaped member 110A is folded.

As shown in Fig. 18, plate-shaped member 110A is folded along folding portions 110B. Thus, as shown in Fig. 19, a tubular shape having the pair of second side surface portions 112 is formed. Here, portions at which two end sides 110C parallel to folding portions 110B are in abutment with each other serve as joining portion 115. It should be noted that the vicinities of two end sides 110C may be joined together with the vicinities overlapping with each other in the thickness direction of plate-shaped member 110A.

Gas-discharge valve 150 is provided in upper surface portion 112A of the pair of second side surface portions 112 and joining portion 115 is provided in bottom surface portion 112B of the pair of second side surface portions 112. Gas-discharge valve 150 is constituted of a thin portion or groove portion provided in upper surface portion 112A of case main body 110. Gas-discharge valve 150 may be formed by a press processing, a cutting processing, or the like. Gas-discharge valve 150 is preferably formed by the press processing. When gas-discharge valve 150 is formed by the press processing, the shape of the thin portion or groove portion is stabilized, thereby obtaining a more stable rupture strength of gas-discharge valve 150.

It should be noted that the gas-discharge valve can be provided in the case main body by joining, to the case main body, a component including a portion serving as the gas-discharge valve. For example, a through hole can be provided in the case main body, the component including the portion serving as the gas-discharge valve can be disposed to close the through hole, and the component and the case main body can be joined by welding or the like.

Gas-discharge valve 150 may be formed in the state of plate-shaped member 110A shown in Fig. 18 (the flat state before the folding), may be formed in the state shown in Fig. 19 (the tubular state after the folding), or part or whole of the processing may be performed at the same time as the folding of plate-shaped member 110A.

When gas-discharge valve 150 is formed in the state of plate-shaped member 110A before the folding, case main body 110 can be more effectively suppressed from being deformed due to a strain in the processing of forming gas-discharge valve 150.

It should be noted that when gas-discharge valve 150 is formed in the state after the folding, gas-discharge valve 150 can effectively suppressed from being deformed due to the folding.

### (Configuration of Insulating Sheet 700)

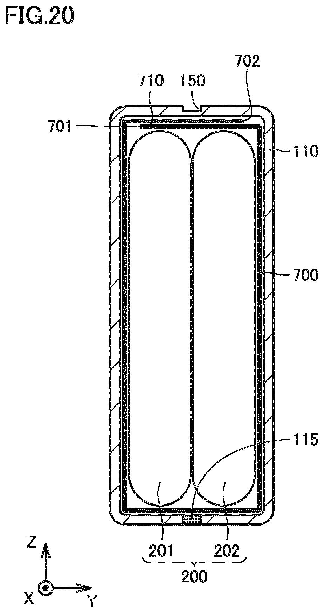

Fig. 20 is a diagram showing exemplary arrangements of electrode assembly 200 and insulating sheet 700 inside case main body 110.

As shown in Fig. 20, insulating sheet 700 is provided to cover the outer periphery of electrode assembly 200. It should be noted that insulating sheet 700 may expose a portion of electrode assembly 200.

The insulating sheet includes a first end side 701 and a second end side 702 each extending in the X direction. Here, one end side of one insulating sheet 700 is first end side 701, and the other end side of one insulating sheet 700 is second end side 702. In the example shown in Fig. 20, each of first end side 701 and second end side 702 is disposed at a position facing upper surface portion 112A of case main body 110. An overlapping region 710 in which two portions of insulating sheet 700 overlap with each other is provided between first end side 701 and second end side 702.

Since each of first end side 701 and second end side 702 of insulating sheet 700 is thus provided to face upper surface portion 112A in which gas-discharge valve 150 is provided, gas generated in electrode assembly 200 is facilitated to move from a clearance in overlapping region 710 toward gas-discharge valve 150.

Insulating sheet 700 is preferably not completely adhered or welded at overlapping region 710. In this way, the above-described gas-discharge path can be stably formed. The overlapping portions of insulating sheet 700 are adhered or welded to each other in overlapping region 710 at a plurality of positions separated from each other, with the result that the tubular shape of insulating sheet 700 can be stably maintained.

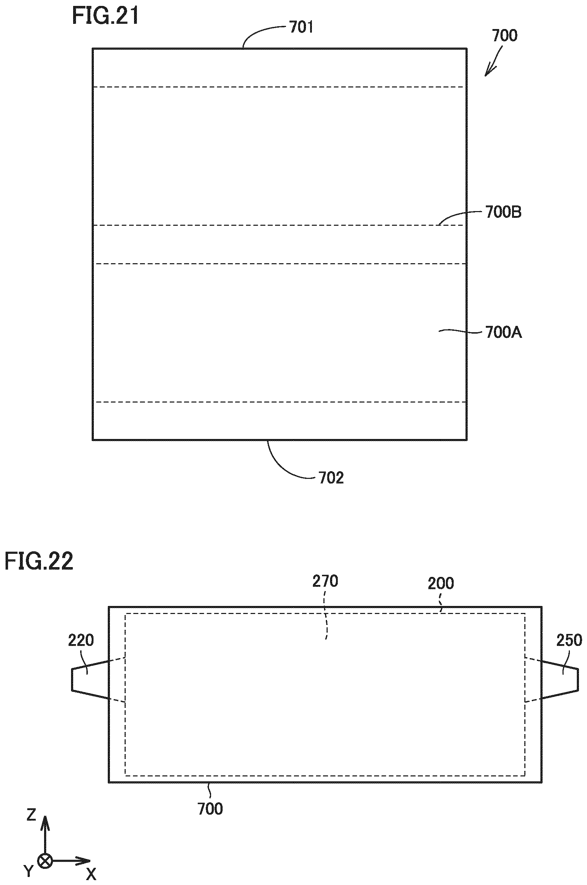

Fig. 21 is a developed view of insulating sheet 700. As shown in Fig. 21, insulating sheet 700 is formed into the tubular shape by folding a sheet material 700A along folding portions 700B.

Fig. 22 is a front view showing electrode assembly 200 and insulating sheet 700. As shown in Fig. 22, insulating sheet 700 is preferably provided to cover the whole of a main body portion 270 (portion other than negative electrode tab group 220 and positive electrode tab group 250) of electrode assembly 200 and root portions of negative electrode tab group 220 and positive electrode tab group 250. That is, the width of insulating sheet 700 in the X direction is larger than the width of main body portion 270 of electrode assembly 200 in the X direction.

In this way, damage of electrode assembly 200 can be more effectively suppressed. Further, as shown in Fig. 20, since overlapping region 710 of insulating sheet 700 is provided on the gas-discharge valve 150 side, releasability of gas from the inner peripheral side of insulating sheet 700 toward gas-discharge valve 150 can be improved, with the result that gas-discharge valve 150 can function more stably.

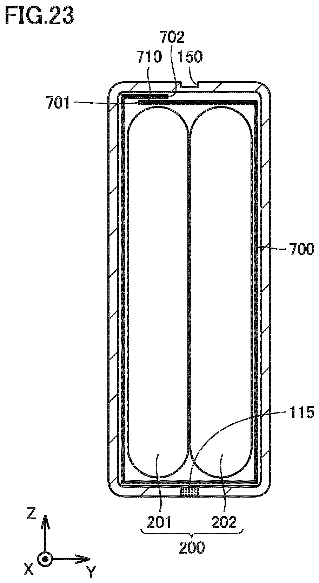

Fig. 23 is a diagram showing a modification of the arrangements of the electrode assembly and the insulating sheet inside case main body 110. In the example shown in Fig. 23, overlapping region 710 of insulating sheet 700 is provided in a region that does not overlap with gas-discharge valve 150 when viewed in the Z direction (region shifted in the Y direction).

In the example shown in Fig. 23, the opening of overlapping region 710 is close to gas-discharge valve 150, thereby further shortening the gas-discharge path from the inner peripheral side of insulating sheet 700 to gas-discharge valve 150. Further, overlapping region 710 is not formed immediately below gas-discharge valve 150. In this way, the releasability of gas toward gas-discharge valve 150 can be further improved.

However, the configuration of insulating sheet 700 is not limited to those shown in Figs. 20 to 23. Further, insulating sheet 700 is not necessarily essential in the present technology.

### (Arrangement of Gas-Discharge Valve 150)

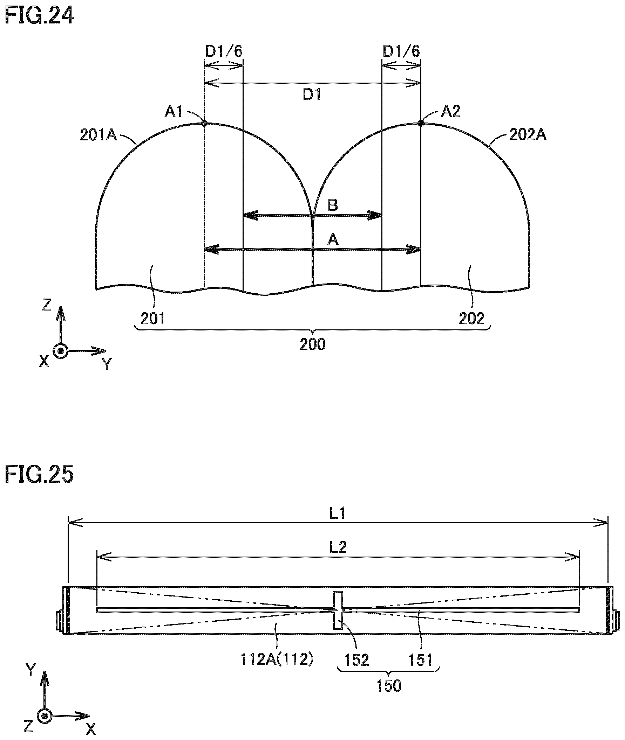

Fig. 24 is a diagram showing an upper portion of electrode assembly 200. As shown in Fig. 24, each of two electrode assemblies 201, 202 included in electrode assembly 200 is a wound type electrode assembly. Electrode assemblies 201, 202 are adjacent to each other. Electrode assembly 201 (first electrode assembly) includes a curved surface 201A (first curved surface) facing upper surface portion 112A of case main body 110, and electrode assembly 202 (second electrode assembly) includes a curved surface 202A (second curved surface) facing upper surface portion 112A of case main body 110.

As shown in Fig. 24, when viewed in the X direction, curved surfaces 201A, 202A respectively have a first apex A1 and a second apex A2, which are each closest to upper surface portion 112A. First apex A1 and second apex A2 are separated from each other by a distance D1 in the Y direction. Here, when a region located between first apex A1 and second apex A2 is defined as a "region A", at least a portion of gas-discharge valve 150 (more preferably, a portion corresponding to a starting point of rapture) is preferably disposed in region A. Preferably, when viewed in the Z direction, 50% or more, more preferably, 70% or more of the area of gas-discharge valve 150 is disposed in region A.

More preferably, as shown in Fig. 24, when a region between a position shifted inward by D1/6 from first apex A1 and a position shifted inward by D1/6 from second apex A2 is defined as a region B, at least a portion of gas-discharge valve 150 (more preferably, the portion corresponding to the starting point of rapture) is disposed in region B, and when viewed in the Z direction, 50% or more, more preferably, 70% or more of the area of gas-discharge valve 150 is disposed in region B.

Each of Figs. 25 to 33 is a diagram showing an exemplary arrangement of gas-discharge valve 150 in upper surface portion 112A of case main body 110. In each of Figs. 25 to 33, chain double-dashed lines correspond to diagonal lines of upper surface portion 112A having a rectangular shape.

A length ratio of the short side and long side of upper surface portion 112A having a rectangular shape and provided with gas-discharge valve 150 is preferably about 1:6 to 1:30.

In the example shown in Fig. 25, gas-discharge valve 150 includes a first portion 151 extending in the X direction (long-side direction) and a second portion 152 extending in the Y direction (short-side direction). First portion 151 and second portion 152 intersect each other at the center (intersection of the diagonal lines) of upper surface portion 112A.

When the length of case main body 110 in the X direction is represented by L1 and the length of first portion 151 of gas-discharge valve 150 is represented by L2, L2/L1 is preferably more than 0.5, and is more preferably more than 0.6.

Since a relatively large opening area of gas-discharge valve 150 can be secured in this way, the gas can be discharged more effectively when gas-discharge valve 150 is fractured. It should be noted that when gas-discharge valve 150 is opened, the rapture preferably occurs in a length of about 2/3 or more of L1.

Moreover, since second portion 152 intersecting (orthogonal to) first portion 151 is further provided, second portion 152 can be also fractured in addition to first portion 151, thereby further increasing the opening area of gas-discharge valve 150.

The remaining thickness of the groove portion (thin portion) constituting gas-discharge valve 150 can be changed depending on a position. For example, the remaining thickness around the intersection portion between first portion 151 and second portion 152 can be made relatively thin (the groove can be formed to be deep). When the internal pressure of case 100 is increased, relatively large stress is generated on the diagonal lines of upper surface portion 112A, thereby causing a relatively large deformation in that portion. Since the portion having a small remaining thickness is provided on the diagonal lines of upper surface portion 112A, the portion to be greatly deformed (have a large stress) is made thin, i.e., a portion on which stress is to be concentrated and a portion having weak strength coincide with each other, with the result that fracture location and fracture strength of gas-discharge valve 150 can be stabilized. As a result, a working pressure of gas-discharge valve 150 can be stabilized, thereby improving the reliability of gas-discharge valve 150.

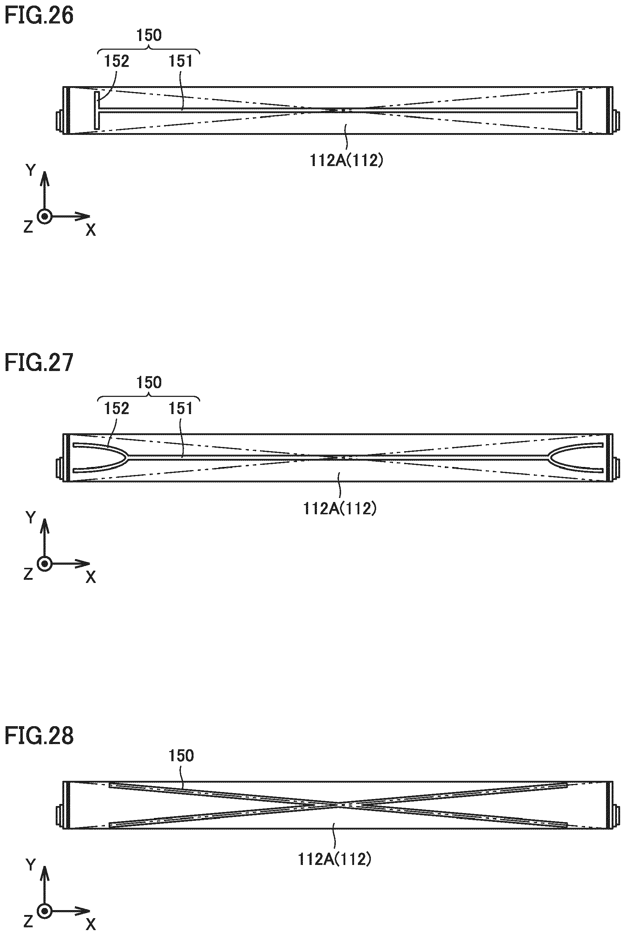

In each of the examples shown in Figs. 26 and 27, gas-discharge valve 150 includes a first portion 151 extending in the X direction (long-side direction) and two second portions 152 separated from each other. In each of the examples of Figs. 26 and 27, two second portions 152 are connected to first portion 151 at both ends of first portion 151 in the X direction; however, second portions 152 may be connected to portions other than the both ends of first portion 151 in the X direction. Further, the shapes of two second portions 152 are not limited to those shown in Figs. 26 and 27.

In the example shown in Fig. 28, gas-discharge valve 150 is disposed to have a substantially X shape along the diagonal lines of upper surface portion 112A.

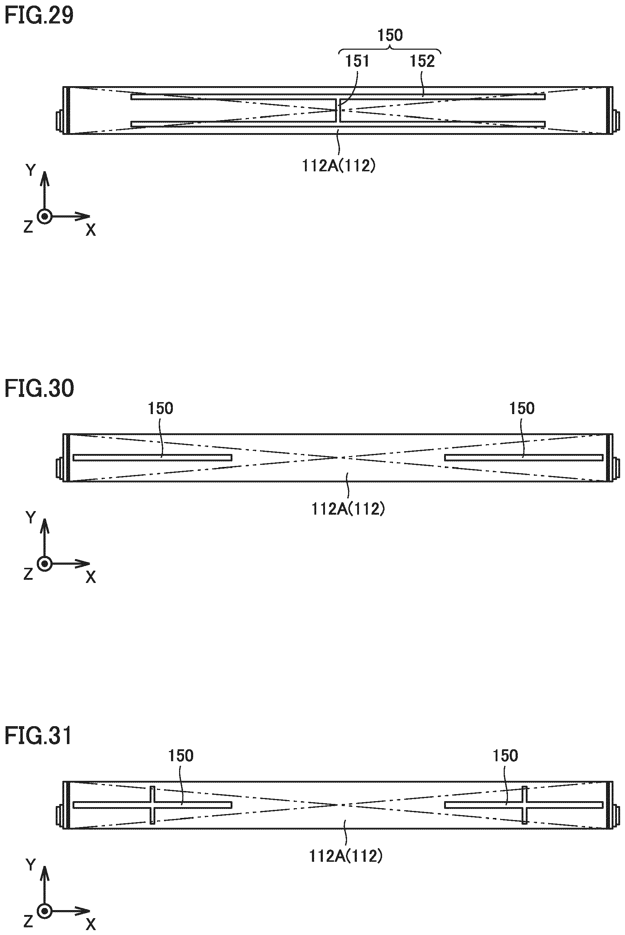

In the example shown in Fig. 29, gas-discharge valve 150 includes a first portion 151 extending in the Y direction (short-side direction) and two second portions 152 extending in the X direction (long-side direction). In the example of Fig. 29, two second portions 152 are connected to first portion 151 at both ends of first portion 151 in the Y direction; however, second portions 152 may be connected to portions other than the both ends of first portion 151 in the Y direction.

In each of the examples shown in Figs. 30 to 33, gas-discharge valve 150 is disposed in each of a plurality of regions separated from each other. In each of the examples of Figs. 30 to 33, two separate gas-discharge valves 150 are disposed to respectively reach the end portions of upper surface portion 112A in the X direction. The gas-discharge valve may be disposed in each of three or more regions.

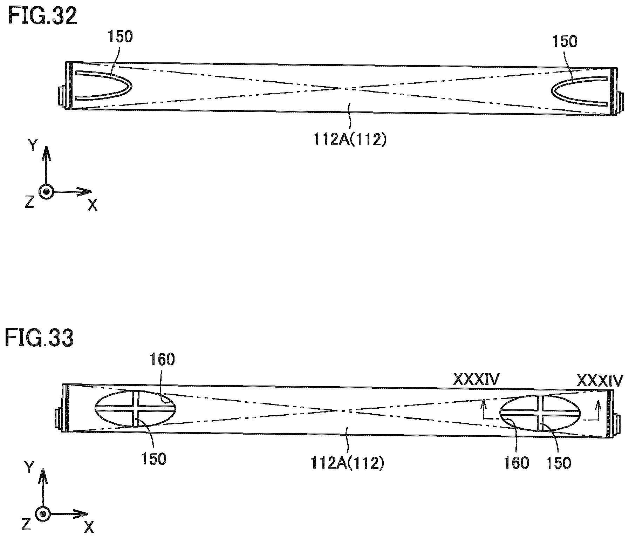

In the example of Fig. 30, each of two gas-discharge valves 150 is formed to have a straight-line shape so as to extend in the X direction (long-side direction), whereas in the example of Figs. 31 and 33, each of two gas-discharge valves 150 is formed to have a substantially cross shape. In the example of Fig. 32, each of two gas-discharge valves 150 is formed to have a substantially U shape so as to open toward the end portion side in the X direction.

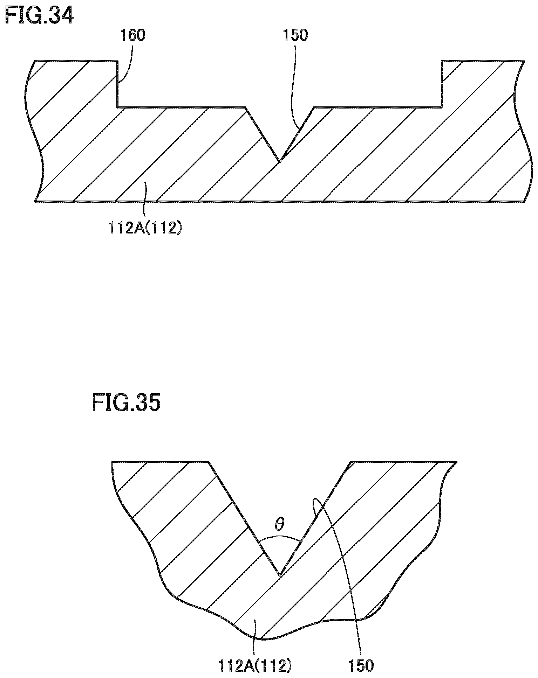

In the example of Fig. 33, each of gas-discharge valves 150 is disposed inside a recess 160 (thin region) formed in upper surface portion 112A. Fig. 34 is a cross sectional view along XXXIV-XXXIV in Fig. 33. As shown in Fig. 34, since recess 160 is formed such that the thickness of case main body 110 is relatively small, an amount of deformation thereof when the internal pressure of case 100 is increased is relatively large. Therefore, by forming gas-discharge valve 150 in recess 160, gas-discharge valve 150 can function more stably when the internal pressure of case 100 is increased.

The length of each gas-discharge valve 150 is preferably about 1/15 or more, more preferably about 1/8 or more, and still more preferably about 1/5 or more of length L1 (Fig. 25) of case main body 110.

The arrangement of gas-discharge valve 150 is not limited to those shown in Figs. 25 to 34. Further, the embodiments illustrated in Figs. 25 to 34 can be used in combination.

Fig. 35 is an enlarged cross sectional view showing an exemplary groove portion constituting gas-discharge valve 150. As shown in Fig. 35, the groove portion constituting gas-discharge valve 150 is formed in the outer surface of case main body 110. It should be noted that the groove portion may be formed in the inner surface of case main body 110.

Since the groove portion constituting gas-discharge valve 150 is formed in the outer surface of case main body 110, electrode assembly 200 can be suppressed from being caught in (interfering with) the groove portion when inserting electrode assembly 200 into case main body 110. On the other hand, when the groove portion is formed in the inner surface of case main body 110, the surface of the groove portion is protected after electrode assembly 200 is inserted into case main body 110 and sealing is attained by first sealing plate 120 and second sealing plate 130, with the result that the working pressure of gas-discharge valve 150 can be further stabilized.

In the example shown in Fig. 35, gas-discharge valve 150 is constituted of a groove portion having a substantially V shape. In one example, an opening angle θ of the substantially V shape is about 60° or more and 90° or less. It should be noted that the shape of the groove portion constituting gas-discharge valve 150 is not limited to that shown in Fig. 35, and gas-discharge valve 150 may be constituted of a groove portion having a substantially rectangular cross sectional shape, for example.

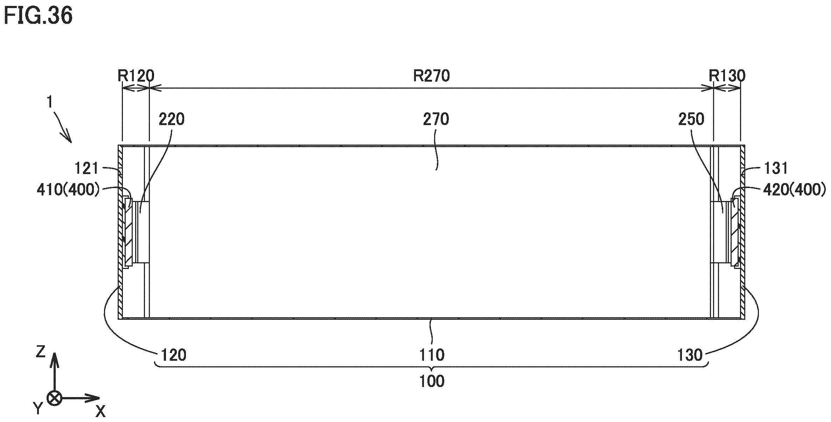

Fig. 36 is a diagram for illustrating the arrangement of gas-discharge valve 150 in the X direction (first direction).

As shown in Fig. 36, electrode assembly 200 includes: main body portion 270; and negative electrode tab group 220 and positive electrode tab group 250 protruding from main body portion 270 to the first sealing plate 120 side and the second sealing plate 130 side respectively.

Upper surface portion 112A of case main body 110 has: a region R270 facing main body portion 270 of electrode assembly 200; an end portion region R120 located close to first sealing plate 120 with respect to main body portion 270; and an end portion region R130 located close to second sealing plate 130 with respect to main body portion 270. At least a portion of gas-discharge valve 150 is disposed to reach each of end portion regions R120, R130.

In one example, the length of each of end portion regions R120, R130 in the X direction is about 12 mm±1 mm. The length of each of end portion regions R120, R130 is, for example, about 1/5 or less of length L1 of case main body 110.

Gas-discharge valve 150 is formed to reach a position displaced outward (to each of the first sealing plate 120 side and the second sealing plate 130 side) from the boundary between region R270 and each of end portion regions R120, R130 by a length of, for example, about 50% or more of the length of each of end portion regions R120, R130.

Since gas-discharge valve 150 is thus disposed to reach each of end portion regions R120, R130 located at the both ends in the X direction, the gas can flow to gas-discharge valve 150 through the clearance above each of negative electrode tab group 220 and positive electrode tab group 250 when the internal pressure of case 100 is increased, with the result that gas-discharge valve 150 can be fractured more smoothly to discharge the gas.

### (Functions and Effects)

Since secondary battery 1 according to the present embodiment has such a structure that electrode assembly 200 is inserted into case main body 110 provided with first opening 113 and second opening 114 facing each other and first opening 113 and second opening 114 are sealed, the height of secondary battery 1 can be reduced, with the result that secondary battery 1 can have high capacity and can allow for high ease of mounting on a vehicle.

Further, since gas-discharge valve 150 is provided in upper surface portion 112A of case main body 110 and joining portion 115 is provided in bottom surface portion 112B facing upper surface portion 112A, gas-discharge valve 150 and joining portion 115 can be separated from each other to be located in the different side surfaces of case main body 110 so as to stabilize the working pressure of gas-discharge valve 150, with the result that secondary battery 1 having a high capacity and high reliability can be provided.

It should be noted that gas-discharge valve 150 may be provided in bottom surface portion 112B of case main body 110 and joining portion 115 may be provided in upper surface portion 112A facing bottom surface portion 112B.

Further, as shown in Fig. 20 and Fig. 23, since overlapping region 710 of insulating sheet 700 faces upper surface portion 112A provided with gas-discharge valve 150, gas generated inside electrode assembly 200 can smoothly flow toward gas-discharge valve 150.

Further, as shown in Fig. 24, since at least a portion of gas-discharge valve 150 is disposed in region A or region B between first apex A1 and second apex A2 of the plurality of electrode assemblies 201, 202 adjacent to each other, gas generated inside electrode assembly 200 can smoothly flow toward gas-discharge valve 150. Therefore, the working pressure of gas-discharge valve 150 can be further stabilized.

In the present embodiment, it has been illustratively described that each of the respective centers of negative electrode tab group 220 and positive electrode tab group 250 is provided in the vicinity of the center of electrode assembly 200 in the Z direction; however, each of the centers of negative electrode tab group 220 and positive electrode tab group 250 may be disposed at a position opposite to gas-discharge valve 150 (upper surface portion 112A), i.e., a position shifted to the lower side (the bottom surface portion 112B side) in the Z direction. In this way, the gas-discharge path to gas-discharge valve 150 can be more readily secured.

In the example of Fig. 2, joining portion 115 is provided at the center of bottom surface portion 112B in the Y direction. In the Y direction, joining portion 115 can be disposed at a position displaced from the center of bottom surface portion 112B to any of the end portion sides thereof (one of the two long end sides of bottom surface portion 112B). In such a case, since joining portion 115 is displaced from a portion at which stress is likely to be concentrated, joining portion 115 can be more securely suppressed from being damaged even when the internal pressure in case 100 is increased. Therefore, gas-discharge valve 150 functions more stably. In particular, a portion of joining portion 115 located at the center of bottom surface portion 112B in the X direction preferably has such a configuration.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A secondary battery (1) comprising:
an electrode assembly (200, 201, 202) including a first electrode (210) and a second electrode (240) having a polarity different from a polarity of the first electrode (210); and
a case (100) that accommodates the electrode assembly (200, 201, 202),
wherein
the case (100) includes
a case main body (110) provided with a first opening (113) and a second opening (114), the first opening (113) being located at an end portion of the case main body (110) on a first side in a first direction, the second opening (114) being located at an end portion of the case main body (110) on a second side opposite to the first side in the first direction,
a first sealing plate (120) that seals the first opening (113), and
a second sealing plate (130) that seals the second opening (114),
the case main body (110) includes a pair of first walls (111) and a pair of second walls (112), the pair of first walls (111) facing each other in a second direction orthogonal to the first direction, the pair of second walls (112) facing each other in a third direction orthogonal to the first direction and the second direction, an area of each of the pair of first walls (111) being larger than an area of each of the pair of second walls (112),
one of the pair of second walls (112) is provided with a gas-discharge valve (150) that is fractured when pressure in the case (100) becomes equal to or more than a predetermined value, and
the other of the pair of second walls (112) is provided with a joining portion (115) extending in the first direction.

2. The secondary battery (1) according to claim 1, wherein the gas-discharge valve (150) is provided with a thin portion or groove portion formed in the one of the pair of second walls (112).

3. The secondary battery (1) according to claim 1 or 2, wherein
the electrode assembly (200, 201, 202) includes a main body portion (270), a first electrode tab (230) electrically connected to the first electrode (210) and located on the first side with respect to the main body portion (270), and a second electrode tab (260) electrically connected to the second electrode (240) and located on the second side with respect to the main body portion (270),
the first electrode tab (230) is electrically connected to a first electrode terminal (300) provided on the first sealing plate (120), and
the second electrode tab (260) is electrically connected to a second electrode terminal (300) provided on the second sealing plate (130).

4. The secondary battery (1) according to claim 1 or 2, wherein
the electrode assembly (200, 201, 202) includes a main body portion (270), a first electrode tab (230) electrically connected to the first electrode (210) and located on the first side with respect to the main body portion (270), and a second electrode tab (260) electrically connected to the second electrode (240) and located on the second side with respect to the main body portion (270),
at least a portion of the gas-discharge valve (150) is disposed in a first end portion region close to the first opening (113) with respect to the main body portion (270) of the electrode assembly (200, 201, 202) in the first direction, and
at least a portion of the gas-discharge valve (150) is disposed in a second end portion region close to the second opening (114) with respect to the main body portion (270) of the electrode assembly (200, 201, 202) in the first direction.

5. The secondary battery (1) according to any one of claims 1 to 4, wherein
the electrode assembly (200, 201, 202) includes a first electrode assembly (200, 201, 202) and a second electrode assembly (200, 201, 202), and each of the first electrode assembly (200, 201, 202) and the second electrode assembly (200, 201, 202) is a wound type electrode assembly (200, 201, 202),
the first electrode assembly (200, 201, 202) and the second electrode assembly (200, 201, 202) are disposed adjacent to each other,
the first electrode assembly (200, 201, 202) includes a first curved surface (201A, 202A) facing the one of the pair of second walls (112), and the first curved surface (201A, 202A) has a first apex closest to the one of the pair of second walls (112),
the second electrode assembly (200, 201, 202) includes a second curved surface (201A, 202A) facing the one of the pair of second walls (112), and the second curved surface (201A, 202A) has a second apex closest to the one of the pair of second walls (112), and
at least a portion of the gas-discharge valve (150) is disposed in a region located between the first apex and the second apex in the second direction.

6. The secondary battery (1) according to any one of claims 1 to 5, further comprising an insulating sheet (700) covering at least a portion of an outer periphery of the electrode assembly (200, 201, 202), wherein
the insulating sheet (700) includes a first end side (701) and a second end side (702) each extending in the first direction,
each of the first end side (701) and the second end side (702) is disposed at a position facing the one of the pair of second walls (112), and
a region in which two portions of the insulating sheet (700) overlap with each other is provided between the first end side (701) and the second end side (702).

7. The secondary battery (1) according to any one of claims 1 to 6, wherein the gas-discharge valve (150) is disposed at each of a plurality of regions separated from each other in the one of the pair of second walls (112).

8. The secondary battery (1) according to any one of claims 1 to 7, wherein
a thin region of the case main body (110) having a relatively small thickness is formed in the one of the pair of second walls (112), and
the gas-discharge valve (150) is disposed inside the thin region.

9. The secondary battery (1) according to any one of claims 1 to 8, wherein the joining portion (115) is disposed at a position deviated from a center of the other of the pair of second walls (112) to any of end portion sides of the other of the pair of second walls (112) in the second direction.
